# EUROPÄISCHE PATENTSCHRIFT

(11) **EP 3 943 456 B1**
(45) Veröffentlichungstag und Bekanntmachung des Hinweises auf die Patenterteilung: **24.07.2024**
(21) Anmeldenummer: 20210936.9
(22) Anmeldetag: 01.12.2020
(51) Int. Cl.: C03B 1/02, C03C 1/00

(54) **VERFAHREN UND VORRICHTUNG ZUR HERSTELLUNG VON STÜCKWARE**
PROCESS AND APPARATUS FOR MAKING PIECE GOODS
PROCÉDÉ ET DISPOSITIF POUR FABRIQUER DES ARTICLES À LA PIÈCE

(43) Veröffentlichungstag der Anmeldung: 26.01.2022
(73) Patentinhaber: SAB Sondermaschinen- und Anlagen-Bau GmbH, 8530 Deutschlandsberg (AT)
(72) Erfinder: Sackl, Stefan, 8541 Bad Schwanberg (AT)
(74) Vertreter: Wirnsberger & Lerchbaum Patentanwälte OG

(56) Entgegenhaltungen:
- GB-A- 2 565 261
- US-A1- 2017 327 412

## Beschreibung

Die Erfindung betrifft ein Verfahren zur Herstellung von Stückware.

Weiter betrifft die Erfindung eine Vorrichtung zur Herstellung von Stückware.

Gemäß dem Stand der Technik sind verschiedene Verfahren zur Herstellung von Stückware bekannt, welche silicatbasierte Feststoffe als Ausgangstoff einsetzen. Um aus den Ausgangsstoffen Stückware, Pellets oder Granulate herstellen zu können, werden die silicatbasierten Feststoffe für gewöhnlich mit weiteren Komponenten vermengt, welche insbesondere Tonerde sowie diverse Alkali- und Erdalkalioxide umfassen. Zum Erleichtern der Formgebung wird die erhaltene Mischung oftmals mit Wasser vermengt, sodass eine teigartige Masse erhalten wird, welche leichter in Form gebracht werden kann. Zur Formgebung werden zumeist Pelletierteller oder Pelletpressen mit entsprechend geformten Walzen verwendet. Diese sind im Regelfall aus Stahl gefertigt, wobei es einerseits durch die abrasive Wirkung der silicatbasierten Bestandteile der Masse zu einem hohen Verschleiß der formgebenden Bauteile kommt und andererseits Stückware erhalten wird, welche eine brüchige oder bröselige Beschaffenheit aufweist. In derartigen Verfahren erhältliche Stückware hat sich somit nicht geeignet erwiesen, um beispielsweise im Rahmen einer Glasherstellung einer Glasschmelze beigemengt zu werden, zumal die Glasschmelze bei Beimengung derartiger Stückware aufschäumt. US2017327412 A1 offenbart ein Verfahren zur Herstellung von Stückware, wobei flüssiges Wasserglas mit Glaspulver gemischt wird, die Michung auf einen Granulierteller aufgebracht wird wodurch sich die Masse in Roh-Pellets teilt, welche dann durch Erhitzung auf 200°C verfestigt werden.

Demnach ist die Aufgabe der Erfindung darin zu sehen, ein Verfahren der eingangs genannten Art anzugeben, welches die oben stehenden Nachteile vermeidet und eine einfache und kostengünstige Herstellung von Stückware ermöglicht, welche insbesondere im Zuge einer Glasherstellung einer Glasschmelze beigemengt werden kann.

Zudem ist es Aufgabe der Erfindung, eine Vorrichtung zur Herstellung von Stückware anzugeben.

Die erste Aufgabe wird gemäß Anspruch 1 dadurch gelöst, dass flüssiges Wasserglas mit zumindest einer festen Komponente auf Silicatbasis, insbesondere Glaspulver, zu einer Masse vermischt und flächig auf eine Arbeitsfläche aufgebracht wird, wonach die Masse geteilt und auf eine Temperatur unterhalb einer Glasübergangstemperatur erhitzt wird, sodass Stückware erhalten wird, insbesondere ein oder mehrere formstabile Pellets.

Dadurch ergibt sich erfindungsgemäß der Vorteil, dass dichte Stückware erhalten wird, welche bei Zugabe zu einer Glasschmelze einem Aufschäumen der Schmelze, wie dies bei Glaspulver oder bröseliger Stückware der Fall ist, vorbeugt. Dabei kann eine Stückware derart dimensioniert sein, dass diese als Pellet, Tafel oder Platte bezeichnet werden kann. Zudem kann diese unabhängig von einer Partikelgröße des Glaspulvers hergestellt werden, wodurch Glasabfälle aller Art wiederaufbereitet werden können. Hierbei können in der Altglasverwertung anfallende Glaspulver oder Glasmehle mit anderen pulverartigen Glasabfällen vermischt und als silicatbasierter Feststoff in einem erfindungsgemäßen Verfahren zu Stückware verarbeitet werden. Alternativ können in einer Verwertungsanlage anfallende Glasabfälle auch gemahlen werden, um Glaspulver zu erhalten.

Als feste Komponente auf Silicatbasis werden alle Verbindungen angesehen, deren Strukturen zumindest einen Silicat-Tetraeder enthalten. Hierbei besteht ein Silicat-Tetraeder aus einem Siliciumatom, welches in tetraedrischer Anordnung von vier Sauerstoffatomen umgeben ist.

Darüber hinaus ergibt sich aus dem erfindungsgemäßen Einsatz von flüssigem Wasserglas der Vorteil, dass im Mischvorgang kein Wasser zugesetzt werden muss, um eine teigähnliche Konsistenz der Masse zu erreichen, wenngleich dies möglich ist. Da ein Lösungsvorgang von festen Alkalisilicaten in Wasser in der Regel erhöhte Temperaturen und hohe Drücke erfordert, wird der flüssige Aggregatszustand des Wasserglases dahingehend genutzt, dass eine einfache Vermischung der Komponenten stattfindet, welche im gleichen Ausmaß bei einer bloßen Vermischung der Ausgangsmaterialien mit Wasser nicht möglich wäre. Demnach kann das Vermischen der zumindest einen festen Komponente auf Silicatbasis und dem flüssigen Wasserglas auf einfache und effiziente Weise in einer Mischeinheit stattfinden, wobei das Wasserglas eine Verbindung zwischen einzelnen festen Bestandteilen herstellt und somit als Bindemittel dient.

Erfindungsgemäß wird die erhaltene Masse, eine Suspension aus zumindest einer festen Komponente auf Silicatbasis und flüssigem Wasserglas, flächig auf eine Arbeitsfläche aufgebracht. Hierbei kann eine Auftragseinheit zur Anwendung kommen, welche das flächige Auftragen der Masse ermöglicht, sodass ein besonders großer Durchsatz erreicht und zur selben Zeit eine besonders große Menge Stückware produziert werden kann. Die Aufbringung auf die Arbeitsfläche zeitlich von der Formgebung der Masse zu trennen bietet zudem den Vorteil, dass der Verschleiß der einzelnen Bauteile erheblich reduziert wird. Ist die Arbeitsfläche beweglich, beispielsweise als Bandförderer, ausgebildet und das Verfahren als kontinuierlicher Prozess gestaltet, kann die Masse konstant auf die Arbeitsfläche aufgebracht und eine gleichbleibende Qualität der Stückware garantiert werden.

Es kann auch vorgesehen sein, dass die Auftragseinheit unmittelbar an die Mischeinheit angrenzend angeordnet ist, insbesondere in einer kombinierten Einrichtung mit der Mischeinheit zusammengefasst ist.

Weiter kann vorgesehen sein, dass die Auftragseinheit relativ zur Arbeitsfläche bewegbar ist, insbesondere quer zu einer Prozessrichtung und/oder um eine normal zu einer Prozessrichtung bzw. normal zu einer Förderrichtung eines Bandförderers angeordnete Schwenkachse schwenkbar, um die Masse verteilt auf die Arbeitsfläche aufzubringen.

Es kann dann vorgesehen sein, dass die Masse während der Ausführung einer Schwenkbewegung der Auftragseinheit auf die Arbeitsfläche aufgebracht wird. Dabei kann die Auftragseinheit beispielsweise mithilfe eines motorgesteuerten Antriebes, insbesondere eines Servoantriebes, um eine etwa senkrecht bzw. normal zu einer Längsrichtung der Arbeitsfläche ausgerichteten Schwenkachse geschwenkt und zugleich Masse auf die Arbeitsfläche aufgetragen werden. Somit ergibt sich eine oszillierende Bewegung der Auftragseinheit zwischen beiden Auftragungsrändern, bei welcher die Masse kontinuierlich und insbesondere direkt auf die Arbeitsfläche aufgebracht werden kann.

Um eine besonders gleichmäßige Schichtdicke an den Auftragungsrändern zu erreichen, ist bevorzugt vorgesehen, dass eine Auslenkgeschwindigkeit der Auftragseinheit durch den motorgesteuerten Antrieb derart reguliert wird, dass eine Verweilzeit der Auftragseinheit an den Umkehrpunkten reduziert ist. Zudem kann durch den motorgesteuerten Antrieb eine Auslenkgeschwindigkeit nahe den Umkehrpunkten erhöht werden, wodurch eine gleichmäßigere Auftragung über die vorgesehene Auftragungsbreite der Masse erzielt wird.

Zudem wird die flächig auf die Arbeitsfläche aufgetragene Masse geteilt, sodass die Form der erhaltenen Stückware nicht der Auftragungsform der Masse auf der Arbeitsfläche entsprechen muss. Dabei wird zumindest eine Formeinheit zum Teilen der Masse eingesetzt, sodass die Größe der Stückware an den zukünftigen Einsatzbereich angepasst werden kann. Somit kann es entsprechend dem vorgesehenen Einsatzbereich der Stückware zu starken Variationen in Form und Größe kommen.

Darüber hinaus ist erfindungsgemäß vorgesehen, dass die Masse auf eine Temperatur unterhalb der Glasübergangstemperatur erhitzt wird, beispielsweise auf 100 °C bis 500 °C. Dabei wird bevorzugt unter Verwendung zumindest einer Heizeinrichtung ein kontrolliertes Abdampfen des in der Masse enthaltenen Wassers herbeigeführt, wodurch das Wasserglas zunehmend geliert und nach einer gewissen Dauer der Temperaturbehandlung sogar komplett erstarrt. Somit liegt die Masse nunmehr als gehärteter Verbund der Ausgangsstoffe in fester Form vor. Entgegen einer Masse ohne Bindematerial werden die unterschiedlichen festen Ausgangsstoffe durch die Zugabe von Wasserglas jedoch derart miteinander verbunden, dass ein Zerbröseln der gehärteten Masse erfolgreich unterbunden wird. Dementsprechend kann derartige Stückware ohne besondere Vorsichtsmaßnahmen transportiert und gelagert werden. Zusätzlich kann nach dem Härten der Masse mit einer entsprechend ausgebildeten Formeinheit eine zusätzliche Teilung vorgenommen werden, wobei die Masse unter Kraftaufwendung gebrochen wird, um kleinere Stückware zu erhalten. Somit sind Art und Anzahl der Teilungsschritte maßgeblich dafür, wie viele Teile Stückware aus einer bestimmten Menge an Masse erhalten werden können.

Bevorzugt besteht die Masse ausschließlich aus Wasserglas, Glaspulver und gegebenenfalls Wasser, um eine günstige Weiterverarbeitung bei der Glasherstellung zu erreichen.

Die Masse kann grundsätzlich mittelbar oder unmittelbar flächig auf die Arbeitsfläche aufgebracht werden.

Es hat sich bewährt, dass auf die Arbeitsfläche eine pulverförmige Komponente auf Silicatbasis, insbesondere Glaspulver, aufgebracht wird, bevor die Masse auf die Arbeitsfläche aufgebracht wird, sodass die pulverförmige Komponente eine Trennschicht zwischen Masse und Arbeitsfläche bildet. Dadurch wird ein Festkleben der Masse auf der Arbeitsfläche effizient verhindert. Dementsprechend kann die bearbeitete Masse bzw. die Stückware leicht von der Arbeitsfläche entfernt werden, ohne eine Zerstörung oder Beschädigung der Stückware befürchten zu müssen. Zudem kann dadurch auf ein und dieselbe Oberfläche erneut Masse aufgebracht werden, ohne dass zwischenzeitlich eine Reinigung der Arbeitsfläche notwendig ist. Beim Einsatz eines Bandförderers gemäß der Erfindung, von welchem ein Gurt eine bewegbare Arbeitsfläche bildet, kann eine separate Einheit zur Auftragung einer pulverförmigen Komponente auf Silicatbasis, insbesondere Glaspulver, vorgesehen sein, welche ein Beschichten des Bandes vor dem Kontakt mit der zu verarbeitenden Masse sicherstellt. Hierbei kann am Ende des Bandförderers eine Auffangeinheit zum Wiedereinspeisen des nicht an der Stückware haftenden Glaspulvers vorgesehen sein, sodass dieses innerhalb des Verfahrens recycelt werden kann.

Mit Vorteil wird zur Bildung der Masse flüssiges Wasserglas mit Wasser und der festen Komponente vermischt, wobei bevorzugt zunächst das flüssige Wasserglas mit Wasser verdünnt und anschließend die feste Komponente beigemengt wird. Durch das Verdünnen des Wasserglases, insbesondere in einem Verhältnis von zwei Teilen flüssigem Wasserglas zu ein bis vier Teilen Wasser, kann die Viskosität der Masse entsprechend herabgesetzt und nach Bedarf eingestellt werden. Dadurch kann der Anteil an festen Komponenten derart angepasst werden, dass Stückware mit besonders hohem Anteil an Feststoffen, insbesondere Glaspulver, hergestellt werden kann. Hierbei hat es sich bewährt, dass der Anteil an festen Komponenten erheblich höher als der Anteil flüssigen Wasserglases ist, wobei insbesondere ein Verhältnis von einem Teil flüssigen Wasserglas zu fünf bis fünfzehn Teilen fester Komponente vorgesehen sein kann. Folglich kann durch den Wasseranteil der Masse die Dichte der Stückware direkt beeinflusst und entsprechend dem künftigen Anwendungsbereich angepasst werden. Hierbei hat es sich bewährt, zunächst das bereits gelöste Wasserglas zu verdünnen, ehe der Lösung die festen Komponenten beigemengt werden, sodass bei geringem Zeitaufwand gleichzeitig eine hohe Homogenität der Masse erreicht wird. Zudem wirkt sich die Homogenität der Masse direkt auf die Beschaffenheit der Stückware aus.

Bei einer inhomogenen Verteilung der festen Komponenten in der Masse, kann davon ausgegangen werden, dass während der Temperaturbehandlung verdampftes Wasser zur Bildung von Hohlräumen innerhalb der Stückware führt. Folglich wird die Dichte der Stückware verringert, wodurch auftretende Transportkosten bei konstantem Gewicht unvorteilhaft beeinflusst werden.

Zudem findet der Schmelzprozess inhomogener Stückware bei der Zugabe zu einer Glasschmelze weniger gleichmäßig statt, wodurch zum einen mit einem erhöhten Zeitbedarf und zum anderen mit einem Aufschäumen der Glasschmelze zu rechnen ist. Vorstehende Nachteile werden durch die Herstellung einer homogenen Masse aus flüssigem Wasserglas und zumindest einer festen Komponente auf Silicatbasis vermieden.

Es ist zweckmäßig, wenn die Masse mit einer Schichtdicke zwischen 1 cm und 15 cm, bevorzugt zwischen 1 cm und 5 cm, und einer Breite zwischen 50 cm und 250 cm, bevorzugt zwischen 70 cm und120 cm, auf die Arbeitsfläche aufgebracht wird. Durch die Auftragung der Masse mit verhältnismäßig großer Breite kann die Anzahl der simultan hergestellten Stückware entsprechend erhöht werden. Darüber hinaus wird eine große Bandbreite an Formen und Größen der hergestellten Stückware zugelassen, weshalb auf individuelle Anforderungen des jeweiligen Anwendungsbereiches eingegangen werden kann. Dementsprechend wäre auch die Herstellung von Stückware mit den Abmessungen eines handelsüblichen Mauerziegels möglich.

Es hat sich bewährt, dass die Masse nivelliert wird. Hierbei kann eine Formeinheit wie eine Walze oder dergleichen derart ausgebildet sein, dass mit dieser eine besonders ebene Oberfläche der Masse erzeugt wird. Durch die dabei erzeugte Oberfläche kann eine anschließende Erwärmung der Masse und ein Abdampfen des in der Masse enthaltenen Wassers gleichmäßiger stattfinden. Im Gegensatz hierzu hätte ein ungleichmäßiges Abdampfen zur Folge, dass aufgrund der unterschiedlichen Hitzeverteilung auf die jeweiligen Bereiche der Masse ein im Inneren der Masse entstehender Wasserdampf zu langsam entweichen und es zu einer Blasenbildung im Teig käme. Ähnlich der Verwendung einer inhomogenen Masse weist derartig hergestellte Stückware im Inneren zumeist Hohlräume auf. Folglich kann dieser Nachteil durch Stückware mit einer ebenen Oberfläche vermieden werden, wobei diese darüber hinaus auch leichter zu stapeln, und deshalb einfacher, platzsparender und damit kostengünstiger transportierbar ist. Das Nivellieren kann beispielsweise mit einer über der Arbeitsfläche mit festem Abstand zur Arbeitsfläche angeordneten Walze erfolgen.

Vorteilhafterweise wird die Masse entlang einer Längsrichtung und/oder Querrichtung geteilt. Hierbei können eine oder mehrere Formeinheiten zum Einsatz kommen, sodass Größe und Form der Stückware nach Belieben angepasst werden können. Dabei kann ein Teilen der Masse in Längsrichtung und/oder Querrichtung sowohl vor als auch nach dem Erhitzen der Masse stattfinden. Beispielsweise kann vorgesehen sein, dass das Teilen der Masse in Längsrichtung vor dem Erhitzen und das Teilen in Querrichtung nach dem Erhitzen der Masse durchgeführt wird. Dementsprechend kann aufgrund der festeren Beschaffenheit der Masse nach dem Erhitzen, auch ein Brechen der Masse als Teilen angesehen werden.

Ein Brechen der Masse in Längs- und/oder Querrichtung kann durch eine Brechvorrichtung erfolgen. Hierbei kann eine solche Brechvorrichtung beispielsweise eine angetriebene Welle aufweisen, welche insbesondere um eine zur Querrichtung parallele Rotationsachse drehbar über bzw. neben der Arbeitsfläche angeordnet sein kann, wobei an der Welle Brechelemente angebracht und eine kammartige Gegenplatte vorgesehen sein können, über welche Gegenplatte die Masse bewegt wird. Als Querrichtung wird hier eine Richtung bezeichnet, welche in einer Ebene der Arbeitsfläche bzw. parallel dazu liegt und etwa normal zu einer Prozessrichtung orientiert ist, welche Prozessrichtung auch als Längsrichtung bezeichnet werden kann. Dabei kann ein motorgesteuerter Antrieb der Welle der Brechvorrichtung zur Anwendung kommen, durch welchen beispielsweise eine Drehzahl der Welle an eine Geschwindigkeit eines Förderers, insbesondere eines Bandförderers, anpassbar ist, um insbesondere auch bei wechselnder Fördergeschwindigkeit gleichbleibend große Stückware zu erhalten.

Eine derartige Brecheinrichtung wird bevorzugt zum Teilen bzw. Brechen der Masse in Längs- und Querrichtung eingesetzt, sodass keine weitere Formeinheit erforderlich ist. Besonders bevorzugt ist vorgesehen, dass die Brecheinheit einer Heizeinrichtung in Förderrichtung nachgelagert an der Vorrichtung angeordnet ist, sodass die Masse zunächst erhitzt und anschließend mittels der Brecheinrichtung in Stückware geteilt wird.

Alternativ kann das Teilen der Masse entweder vor oder nach dem Erhitzen und in mehrere Richtungen erfolgen. Demnach kann das Teilen alternativ auch diagonal erfolgen, wodurch jegliche mehreckige Form erzielt werden kann. Darüber hinaus kann das Teilen der Masse in mehrere Richtungen auch gleichzeitig erfolgen, sodass sich eine Zeitersparnis ergibt.

Es ist zweckmäßig, dass die Masse auf eine Temperatur zwischen 100°C und 500°C, bevorzugt 200°C und 400°C, erhitzt und dabei gehärtet wird. Dabei wird unter Verwendung zumindest einer Heizeinrichtung mit entsprechender Leistung sichergestellt, dass beim Erhitzen der Masse lediglich ein Härten stattfindet. Dieses Härten findet im Wesentlichen durch das Abdampfen des in der Masse enthaltenen Wassers statt, wobei das Wasserglas zuerst geliert und letztlich vollends aushärtet, sodass die restlichen in der Masse enthaltenen Komponenten fest miteinander verbunden werden. Abhängig von den Ausgangsmaterialien ist hierbei darauf zu achten, dass ein Überschreiten der Glasübergangstemperatur vermieden wird, da hierbei ein Verschmelzen der einzelnen Komponenten stattfinden würde. Daraus ergäbe sich Stückware, welche aufgrund der verringerten Oberfläche bei der Zugabe zu einer Schmelze für einen Schmelzprozess besonders viel Energie benötigen würde. Im Gegenzug bietet jene Stückware, die wie vorgesehen lediglich gehärtet wurde, den Vorteil eine besonders geringe Schmelzenergie zu benötigen. Bei deren Verwendung wird somit eine weitaus geringere Abkühlung der Schmelze an einer Zugabestelle erzielt. Dieser Effekt resultiert aus der Beschaffenheit der Stückware, welche lediglich aus durch Wasserglas verbundenen festen Komponenten auf Silicatbasis besteht, wobei letztere sich durch im Wesentlichen runde Körner mit entsprechend großer Oberfläche auszeichnet und somit mehr Kontaktfläche zur Schmelze schafft.

Mit Vorteil wird eine Stückware, welche auch als Pellet bezeichnet werden kann, mit einer Länge zwischen 10 cm und 50 cm, einer Breite zwischen 5 cm und 25 cm und einer Höhe zwischen 1 cm und 15 cm hergestellt. Dadurch kann eine vielseitige Anwendung garantiert und die Abmessungen der Stückware an den vorgesehen Einsatzzweck angepasst werden. Zudem ergibt sich, dass die Verwendung von Stückware mit prozesstechnisch angepassten Abmessungen zu einer Zeitersparnis bei der Beschickung und Schmelzdauer führt, wodurch ein effizienter Betrieb verschiedenster Anlagen zur Glasherstellung ermöglicht wird. Während kleine Anlagen zum Einschmelzen von Glasrohstoffen aufgrund des zeitsparenden Schmelzverhaltens bevorzugt mit kleiner Stückware beschickt werden, kann in großen industriellen Anlagen zur Herstellung von Float-, Hohl- oder Rohrglas Stückware mit größeren Abmessungen verarbeitet werden. Bei einem Verfahren zur Herstellung von Glas, wobei einer Glasschmelze, Glaspulver beigemengt wird, hat es sich bewährt, dass das Glaspulver zunächst in einem erfindungsgemäßen Verfahren zu Stückware verarbeitet wird, wonach die Stückware der Glasschmelze beigemengt wird. Dadurch wird ein Aufschäumen der Glasschmelze, wie dies bei der Zugabe von Glaspulvern und/oder -granulaten üblich ist, auf effiziente Weise unterbunden. Zudem erfolgt eine Beimengung der Stückware auf besonders einfache Weise, da aufgrund des oben beschriebenen Schmelzverhaltens der Stückware eine Blasenbildung oder übermäßige Abkühlung der Glasschmelze im Wesentlichen vermieden werden kann. Somit ist ein Recyceln von bislang nicht weiter verwendbarem Glaspulver auf einfache und gleichzeitig effiziente Weise möglich. Bevorzugt weist die der Glasschmelze beigemengte Stückware ausschließlich Glaspulver, Wasserglas und gegebenenfalls Wasser auf, um keine Verunreinigungen in die Glasschmelze einzubringen.

Die zweite Aufgabe wird gemäß Anspruch 9 dadurch gelöst, dass bei einer Vorrichtung der eingangs genannten Art eine Bereitstellungseinheit vorgesehen ist, mit welcher flüssiges Wasserglas und zumindest eine feste Komponente auf Silicatbasis in eine Mischeinheit einbringbar sind, wobei die Mischeinheit zum Vermischen des flüssigen Wasserglases und der festen Komponente auf Silicatbasis zu einer Masse ausgebildet und zumindest eine Auftragseinheit zum Auftragen der Masse auf eine Arbeitsfläche vorgesehen ist, wobei entlang der Arbeitsfläche zumindest eine Formeinheit zum Teilen der Masse sowie zumindest eine Heizeinrichtung zum Erhitzen der Masse angeordnet sind. Mit einer derartigen Vorrichtung ist ein erfindungsgemäßes Verfahren auf besonders effiziente Weise durchführbar.

Erfindungsgemäß ergibt sich der Vorteil, dass flüssiges Wasserglas und zumindest eine feste Komponente auf Silicatbasis durch eine entsprechende Bereitstellungseinheit in die Mischeinheit eingebracht werden. Dabei kann die Bereitstellungseinheit als flüssiges Wasserglas, insbesondere in mit Wasser verdünnter Form, und die feste Komponente enthaltendes Reservoir oder alternativ als flüssiges Wasserglas und die feste Komponente enthaltender Zwischenspeicher oder Behälter ausgebildet sein, sodass die Komponenten der Masse zwar räumlich getrennt, aber dennoch in direkter Umgebung der Mischeinheit aufbewahrt werden können. Zudem kann die Bereitstellungseinheit so ausgebildet sein, dass das Verdünnen von flüssigem Wasserglas und Wasser, vorzugsweise in einem Verhältnis von Wasserglas zu Wasser von 4 : 1 bis 1 : 4, direkt in dieser stattfinden kann. Folglich kann eine solche Bereitstellungseinheit auch zur Variation des Verdünnungsverhältnisses verwendet werden, sodass die minimale Menge Wasserglas zum Einstellen der gewünschten Konsistenz der Masse ermittelt und Produktionskosten gespart werden können. Dementsprechend wird durch die Bereitstellungseinheit ein kontinuierlicher Nachschub der Komponenten in die Vorrichtung sichergestellt. Zudem kann die Bereitstellungseinheit eine Wiegeeinheit umfassen, welche zur Kontrolle und Anpassung eines Verhältnisses der in die Mischeinheit eingebrachten Komponenten dient. Hierbei wird sichergestellt, dass eine Zusammensetzung der Masse an das jeweilige Einsatzgebiet angepasst und über einen längeren Herstellungszeitrum gleichbleibend eingestellt werden kann, wodurch die hergestellte Stückware eine konstante Qualität aufweist. Alternativ kann die Bereitstellungseinheit aber auch so ausgebildet sein, dass die Komponenten der Masse bereits vor dem Einleiten in eine Mischeinheit zusammenführt und gegebenenfalls vermengt werden.

Darüber hinaus ist erfindungsgemäß eine Mischeinheit zum Vermischen des flüssigen Wasserglases und der festen Komponente auf Silicatbasis vorgesehen, welche derart ausgebildet ist, dass eine homogene Suspension der festen Komponente im flüssigen Wasserglas erreicht wird. Dabei steigt die Viskosität der Masse proportional zum Anteil der festen Komponente, wobei in der Regel ein Mischvorgang eine Masse von teigähnlicher Konsistenz erzielen soll. Sollte hierzu ein einzelner Mischvorgang nicht ausreichend sein, kann eine Mischeinheit aus mehreren Mischern mit unterschiedlichen Funktionsprinzipien bestehen, welche miteinander in Wechselwirkung stehen oder nacheinander von der Masse bzw. den Komponenten durchlaufen werden.

In weiterer Folge ist die Vorrichtung üblicherweise derart ausgebildet, dass die Masse zu einer Auftragseinheit befördert und von dieser auf eine Arbeitsfläche aufgebracht werden kann. Hierbei ist die Auftragseinheit derart ausgebildet, dass die Masse zur Arbeitsfläche hin verdichtet und mit einer möglichst gleichmäßigen Schichtdicke auf diese aufgetragen wird. Im günstigsten Fall ist die Auftragseinheit im Wesentlichen als Trichter mit schlitzförmigem Auslass gebildet, wobei alternativ auch eine Ausbildung als Förderschnecke mit Düse, insbesondere Breitschlitzdüse, vorgesehen sein kann. Weiter kann die Auftragseinheit auch einen entlang einer Breite einer Transportbahn über einem Lochblech oder einem Gitter bewegbaren Schlitten mit einem Trichter, welcher gegebenenfalls mittels eines Antriebes quer zur Transportbahn bewegt wird, aufweisen, über welchen Schlitten die Masse durch den Trichter und das Lochblech oder das Gitter ähnlich wie Teig bei einer Spätzlereibe auf die Arbeitsfläche aufbringbar ist.

Alternativ oder ergänzend kann die Auftragseinheit auch unmittelbar an der Mischeinheit angrenzend angeordnet werden, sodass die Masse direkt nach dem Mischen auf die Arbeitsfläche aufgetragen wird. Hierbei ist es von Vorteil, wenn die Auftragseinheit schwenkbar ausgebildet und mithilfe eines Motors um eine senkrechte bzw. normal zur Längsrichtung der Arbeitsfläche verlaufende Schwenkachse schwenkbar ist. Dabei kann eine Bewegung derart vom Motor auf die Auftragseinheit übertragen werden, dass sich eine oszillierende Bewegung der Auftragseinheit ergibt, bei welcher sich die Auslenkungsgeschwindigkeit zum Auslenkungsmaximum hin derart ändert, dass eine erhöhte Masseauftragung an den Umkehrpunkten vermieden wird.

Die Oberfläche ist bevorzugt so ausgebildet, dass ein Festkleben der Masse verhindert wird. Hierzu kann die Oberfläche als engmaschiges Metallgeflecht ausgebildet sein, wobei alternativ auch die Beschichtung einer Metall- oder Kunststoffoberfläche mit einem Antihaftmittel vorgesehen sein kann. Darüber hinaus ist in direkter Nähe zur Arbeitsfläche zumindest eine Formeinheit vorgesehen, welche zum Teilen der Masse ausgebildet ist. Hierdurch kann die Masse in unterschiedliche Teile getrennt werden, wobei die Form der Hergestellten Stückware festgelegt wird. Dabei kann die Formeinheit als Walze, Stab, Keil oder Platte ausgebildet sein. Zum Teilen einer ungehärteten Masse kann die Formeinheit als Schneidwalze oder rotierendes Messer ausgebildet sein, wobei zum Teilen einer gehärteten Masse eine Kante oder ein Stempel eingesetzt werden kann. Entsprechend einer Festigkeit der gehärteten Masse erfolgt das Teilen als Brechen oder Abschlagen. Zudem ist eine Heizeinrichtung zum Erhitzen der Masse an der Arbeitsfläche angeordnet, welche üblicherweise ein Abdampfen des in der Masse enthaltenen Wassers bewirken kann. Letzteres kann dadurch erreicht werden, dass die Heizeinrichtung die Masse auf eine bestimmte Temperatur erhitzt und die Temperatur über eine gewisse Zeitspanne konstant hält. Hierzu kann jede Art von Heizeinrichtung herangezogen werden, bei welcher die Temperatur reguliert werden kann, weshalb sich sowohl elektrische als auch mit fossilen Brennstoffen betriebene Heizeinrichtungen zum Einsatz in einer erfindungsgemäßen Vorrichtung eignen. Hierbei wird die Masse mittels Heizeinrichtung auf eine Temperatur erhitzt, welche unterhalb der Glasübergangstemperatur der Masse liegt, sodass ein Schmelzen der Masse verhindert und die Masse lediglich gehärtet wird, beispielsweise auf eine Temperatur von 100 °C bis 500 °C. Entsprechend soll die Wärmeübertragung möglichst gleichmäßig stattfinden, sodass eine Entstehung von Inhomogenitäten in der gehärteten Masse unterbunden wird. Zudem kann die Heizeinrichtung derart ausgebildet sein, dass diese aus Sicherheitsgründen und/oder zur Wartung schwenkbar gelagert und dadurch aus einer Arbeitsposition wegklappbar ist. Mit Vorteil ist die Mischeinheit als aktiver Mischer, bevorzugt als Rotor-Stator-Mischer, ausgebildet. Hierdurch kann eine effiziente Vermischung von flüssigem Wasserglas und zumindest einer festen Komponente auf Silicatbasis selbst bei hohen Viskositäten stattfinden. Je nach gewünschter Dichte der Stückware und daraus resultierender Viskosität der Masse, kann ein aktiver Mischer als aus dem Stand der Technik bekannter Mischer ausgebildet sein. Zudem können verschiedene Varianten von aktiven Mischern hintereinander oder in einer Schleife geschaltet werden, um eine im Wesentlichen vollständige Homogenisierung der Masse sicherzustellen.

Es hat sich bewährt, dass die Arbeitsfläche relativ zur Auftragseinheit bewegbar ist. Beispielsweise kann hierzu die Auftragseinheit bewegbar sein. Bevorzug ist allerdings vorgesehen, dass die Auftragseinheit stationär ist und die Arbeitsfläche bewegbar ausgebildet ist, gemäß der Erfindung als Gurt eines Bandförderers, um mittels der Auftragseinheit aufgebrachte Masse kontinuierlich zu einer Heizeinrichtung fördern zu können. Dadurch können auch die weiteren Einheiten statisch verbaut werden. Zudem erleichtert eine solche bewegliche Arbeitsfläche eine automatisierte Herstellung der Stückware, sodass ein kontinuierliches Verfahren durchgeführt werden kann. Darüber hinaus kann über eine Geschwindigkeit der bewegbaren Arbeitsfläche eine Wechselwirkung mit der Auftragseinheit herbeigeführt werden, über welche die Menge der aufgetragenen Masse pro Fläche verändert werden kann. Hierzu kann eine Auftragseinheit so ausgebildet sein, dass die Schichtdicke der Masse proportional zur Geschwindigkeit der Arbeitsfläche ist, wodurch bei einer schnelleren Bewegung der Arbeitsfläche eine dünnere Schichtdicke erzielt wird und *vice versa.*

Gemäß der Erfindung ist die Arbeitsfläche durch einen Gurt, welcher bevorzugt als Maschendraht-Gurt ausgebildet ist, eines Bandförderers gebildet. Dies ermöglicht einen kontinuierlichen Betrieb mit einem umlaufenden Band bzw. Gurt, auf welches Band bzw. auf welchen Gurt die Masse aufgetragen werden kann, sodass eine besonders hohe Produktionskapazität der Vorrichtung erreicht wird. Ein Material für den Gurt wird hierbei so gewählt, dass möglich wenig Masse an diesem anhaften kann. Hierzu hat sich ein engmaschiger Maschendraht-Gurt als besonders geeignet herausgestellt. Zusätzlich kann dieser mit einem Antihaftmittel beschichtet werden, sodass die Gefahr eines Festklebens der Masse noch weiter reduziert wird. Alternativ kann der Gurt als herkömmlicher hitzebeständiger Kunststoff gurt ausgebildet sein, wobei auch in diesem Fall eine Antihaftbeschichtung zum Verhindern eines Festklebens der Masse als zweckmäßig erachtet wird.

Günstig ist es, wenn entlang einer Längsrichtung der Arbeitsfläche zwei Auftragseinheiten vorgesehen sind, wobei mit einer ersten Auftragseinheit eine pulverförmige Komponente und mit einer der ersten Auftragseinheit in Längsrichtung nachgelagerten zweiten Auftragseinheit die Masse auf die Arbeitsfläche aufbringbar ist. Die erste Auftragseinheit kann auch an einem Ende der Arbeitsfläche und die zweite Auftragseinheit von dieser in Längsrichtung der Arbeitsfläche beabstandet angeordnet sein. Durch die Ausbildung der Vorrichtung mit zwei Auftragseinheiten kann von der ersten Auftragseinheit eine pulverförmige Komponente auf Silicatbasis, insbesondere Glaspulver, auf die Arbeitsfläche aufgetragen werden, welche ein Festkleben der von der zweiten Auftragseinheit aufgebrachten Masse auf der Arbeitsfläche verhindert. Hierbei ist bevorzugt vorgesehen, dass eine solche pulverförmige Komponente eine Trennschicht zwischen Masse und Arbeitsfläche bildet. Folglich kann bei der Auftragung einer Trennschicht auf die Beschichtung der Arbeitsfläche mit einem weiteren Antihaftmittel verzichtet werden. Hierzu kann vorgesehen sein, dass eine erste Bereitstellungseinheit zur Zufuhr der festen Komponente auf Silicatbasis zur ersten Auftragseinheit und eine zweite Bereitstellungseinheit zur Zufuhr von flüssigem Wasserglas im verdünnten oder unverdünnten Zustand und der festen Komponente auf Silicatbasis, und somit im Wesentlichen der unvermischten Masse, zur zweiten Auftragseinheit und/oder dem Mischer zur Anwendung kommen. Zudem können die Auftragseinheiten wahlweise unterschiedlich oder identisch ausgebildet sein, wobei eine Verdichtung oder gleichmäßige Schichtdicke der aufgetragenen pulverförmigen Komponente nicht zwingend notwendig ist, um eine adäquate Trennschicht auf die Arbeitsfläche aufzubringen. Darüber hinaus kann die Auftragseinheit auch einen entlang einer Breite einer Transportbahn über einem Lochblech oder einem Gitter bewegbaren Schlitten mit einem Trichter, welcher gegebenenfalls mittels eines Antriebes quer zur Transportbahn bewegt wird, aufweisen, sodass die Masse über den Schlitten durch den Trichter und das Lochblech oder das Gitter gepresst und auf die Arbeitsfläche aufgebracht werden kann.

Es ist zweckmäßig, dass mehrere Formeinheiten zum Nivellieren, Teilen und Abtrennen der Masse entlang der Arbeitsfläche angeordnet sind. Dadurch wird ein präzises Formen der Masse ermöglicht, sodass die genauen Abmessungen der Stückware definiert werden können. Hierbei ist eine Formeinheit zum Nivellieren der Masse, insbesondere eine Walze, vorgesehen, wodurch eine besonders glatte Oberfläche der Masse erzielt werden kann. Darüber hinaus kann die Masse durch das Nivellieren gleichzeitig auch verdichtet werden. Die hierfür verwendete Walze weist bevorzugt eine entsprechend harte Oberfläche auf, um ein Festkleben der Masse zu verhindern. Um ein Festkleben der Masse auf effiziente Weise zu unterbinden, ist an der Formeinheit zum Nivellieren der Masse zusätzlich zumindest ein Abstreifer, bevorzugt zwei einander gegenüberliegende Abstreifer, angeordnet. Dabei hat es sich bewährt, zwei gegenüberliegende Abstreifer entlang einer Drehachse der Walze so zu positionieren, dass diese möglichst nahe an der Oberfläche der Masse an der Walze anliegen. Hierbei können die Abstreifer keilförmig ausgebildet sein, wobei die Spitzen der Keile Abstreiflippen bilden, welche die Oberfläche der Nivellierwalze berühren. Eine Formeinheit zum Teilen der Masse ist bevorzugt als Schneidwalze oder rotierendes Messer ausgebildet, wobei das Teilen der Masse in Längs- und/oder Querrichtung vorgesehen sein kann. Es hat sich bewährt, dass eine solche Formeinheit in einer Längsrichtung der Arbeitsfläche vor der Heizeinrichtung angeordnet ist, sodass das Teilen vor der Härtung der Masse erfolgen kann. Darüber hinaus kann eine Formeinheit auch zumindest eine Kante, einen Stempel oder ein Brechelement zum Brechen der gehärteten Masse, bevorzugt in Querrichtung, aufweisen. Eine derartige Formeinheit wird hauptsächlich in Längsrichtung der Vorrichtung bzw. im Verfahren nach der Heizeinrichtung angeordnet, sodass die gehärtete Masse auf einfache Art und Weise gebrochen, insbesondere abgeschlagen, werden kann. Dabei ist es vorteilhaft, wenn die Formeinheit als Brechvorrichtung ausgebildet ist, welche ein oder mehrere Brechelemente umfasst. Zudem sind Brechelemente der Brecheinrichtung mit einer bevorzugt zentralen Aufnahme zum koaxialen anordnen an einer Welle ausgebildet, sodass diese miteinander in Verbindung stehen. Entsprechend können Welle und Brechelemente von einer motorgesteuerten Antriebseinheit in Rotation versetzt werden. Darüber hinaus kann eine kammartige Gegenplatte parallel zur Arbeitsfläche angebracht werden, welche die Masse aufnimmt und zu den Brechelementen leitet. In unmittelbarer Nähe zu den Brechelementen ist die Gegenplatte mit zumindest einem Zinken, insbesondere kammartig mit mehreren in regelmäßigen Abständen angeordneten Zinken, ausgebildet, wodurch die Masse sowohl in Längs- als auch in Querrichtung gebrochen werden kann. Hierbei hat es sich bewährt, wenn die Anzahl der Brechelemente mit der Anzahl der Zinken korrespondiert, insbesondere wenn die Anzahl der Brechelemente um eins größer oder kleiner ist als die Anzahl der Zinken oder der Anzahl der Zinken entspricht. Zudem korrespondiert die Anzahl der Brechelemente bzw. Zinken direkt mit der Anzahl der bei einem Brechvorgang erzeugten Stückware.

Um eine gleichmäßige Erhitzung der Masse zu erzielen, ist zumindest eine Heizeinrichtung ober- und/oder unterhalb der Arbeitsfläche angeordnet. Dadurch werden die flächenmäßig größten Seiten der Masse erhitzt und das Abdampfen des in der Masse enthaltenen Wassers zeitsparend und energieeffizient durchgeführt. In einer bevorzugten Ausbildung werden Heizeinrichtungen ober- und unterhalb der Arbeitsfläche angeordnet, um einen gleichmäßigen Hitzeeintrag in die Masse sicherzustellen. Dabei sind die Heizeinrichtungen flächig ausgebildet und zur Arbeitsfläche hin orientiert. Alternativ können die Heizeinrichtungen auch nur ober- oder unterhalb der Arbeitsfläche angeordnet sein, wobei jedoch die Behandlungszeit üblicherweise erhöht werden sollte, um ein vollständiges Aushärten der Masse garantieren zu können. Die Behandlungszeit durch erhöhte Temperaturen zu reduzieren, wäre zwar prinzipiell möglich, wird aber aufgrund der höheren Wahrscheinlichkeit eines Auftretens von Inhomogenitäten in der Masse als unvorteilhaft erachtet. Darüber hinaus besteht dabei die Gefahr, die Masse bei zu hohen Temperaturen über die Glasübergangstemperatur zu erhitzen, wodurch die Qualität der erhaltenen Stückware drastisch vermindert würde.

Mit Vorteil ist die Heizeinrichtung als Infrarot-, Mikrowellen-, Gas- und/oder Elektroheizstrahler ausgebildet. Hierdurch kann die Masse direkt erhitzt werden, wobei im Falle der Infrarot- und Mikrowellenstrahler sogar die Luft als Wärmeübertragungsmedium ausgeschlossen und die Oberfläche bzw. das Innere der Masse direkt erhitzt wird.

Dementsprechend bieten diese Varianten die größte Energie- und Zeiteffizienz. Darüber hinaus kann auch eine Kombination mehrerer unterschiedlicher Typen von Heizeinrichtungen zweckmäßig sein. So könnte eine Heizeinrichtung beispielsweise zu Beginn des Behandlungsschrittes die Oberfläche der Masse mit Infrarotstrahlung erhitzen und im Anschluss im Inneren der Masse verbliebene Wasserreste mithilfe von Mikrowellenenergie entfernt werden. Alternativ kann auch ein Elektroheizstrahler zur Anwendung kommen, wobei die Masse auf konventionelle Weise stetig erhitzt und dabei gehärtet wird.

Weitere Merkmale, Vorteile und Wirkungen der Erfindung ergeben sich aus den nachfolgend dargestellten Ausführungsbeispielen. Die Zeichnungen, auf welche dabei Bezug genommen wird, zeigen:
Fig. 1 eine perspektivische Darstellung einer erfindungsgemäßen Vorrichtung;
Fig. 2 eine Schnittansicht der Vorrichtung aus Fig. 1;
Fig. 3 eine schematische Darstellung eines erfindungsgemäßen Verfahrens;
Fig. 4 ein Detail einer erfindungsgemäßen Vorrichtung;
Fig. 5 ein weiteres Detail einer erfindungsgemäßen Vorrichtung.

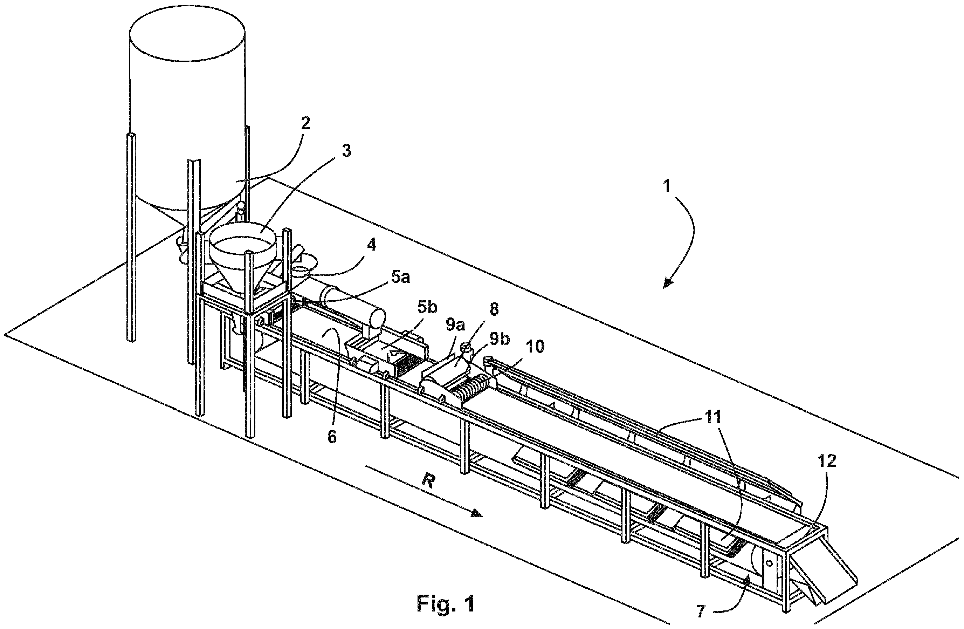

Fig. 1 zeigt eine perspektivische Darstellung einer Vorrichtung 1 zur Herstellung von Stückware. Wird eine solche Vorrichtung zum Herstellen von Stückware aus Glas und/oder glasartigen Materialien wie beispielsweise Glaspulver verwendet, spricht man im Fachjargon von Pellets 13. Hierbei ist eine Bereitstellungseinheit in Form eines Reservoirs 2 am linken Rand der Darstellung erkennbar, welche sowohl flüssiges Wasserglas als auch zumindest eine feste Komponente auf Silicatbasis enthält, welche hier durch Glaspulver gebildet wird.

Darüber hinaus kann das Wasserglas vor einer Vermischung mit dem Glaspulver mit Wasser verdünnt werden, bevorzugt in einem Verhältnis von Wasserglas zu Wasser von 4 : 1 bis 1 : 4, wobei eine Verdünnung von 2 : 1 besonders bevorzugt ist.

In der konkreten Ausführungsvariante ist eine weitere Bereitstellungseinheit umfasst, welche als Wiegeeinheit 3 ausgebildet ist. In dieser kommen Wasserglas, gegebenenfalls Wasser und Glaspulver, welche die Komponenten der Masse 15 darstellen, erstmalig miteinander in Kontakt. Dabei wird das Verhältnis der Komponenten, insbesondere des verdünnten Wasserglases und des Glaspulvers, gravimetrisch aufeinander abgestimmt.

Hierbei kann eine Verdünnung des Wasserglases auch erst in der Wiegeeinheit 3 stattfinden, sodass diese nicht nur das Verhältnis zwischen Glaspulver und Wasserglas, sondern auch die Verdünnung des Wasserglases mit Wasser anpassen kann.

Im Anschluss werden die Komponenten in die Mischeinheit 4 eingebracht, wobei die Komponenten zu einer homogenen Masse 15 vermischt werden. Dabei ist bevorzugt vorgesehen, als Mischeinheit 4 einen aktiven Mischer zu verwenden, der auf dem Rotor-Stator-Prinzip arbeitet. Zudem ist in der Mischeinheit 4 eine Förderschnecke vorgesehen, um die Masse 15 zu einer Auftragseinheit 5b zu befördern.

Hierbei ist die Auftragseinheit 5b zum flächigen Auftragen der Masse 15 auf den Gurt 6, insbesondere einen engmaschigen Maschendraht-Gurt, eines Bandförderers 7 mit einem Lochblech oder Gitter sowie einem Schlitten versehen, wobei der Schlitten die Masse 15 derart durch das Lochblech oder Gitter presst, dass diese flächig auf den Gurt 6 aufgebracht wird. Dabei bildet die aufgetragene Masse 15 eine Schicht mit einer Breite zwischen 50 cm und 250 cm, bevorzugt aber 70 cm bis 120 cm, und einer Schichtdicke zwischen 1 cm und 15 cm, bevorzugt zwischen 1 cm und 5 cm.

Darüber hinaus ist bei der gegenständlichen Variante der Vorrichtung 1 eine zweite Auftragseinheit 5a am Anfang des Gurtes 6 vorgesehen, welche zur Auftragung des Glaspulvers dient und vom Reservoir 2 gespeist wird. Hierbei wird der Gurt 6 mit einer durchgehenden Schicht aus Glaspulver belegt, welche insbesondere eine Höhe zwischen 0,1 cm und 2 cm aufweisen kann, wodurch eine Trennschicht 14 zwischen dem Gurt 6 und der Masse 15 entsteht und ein Festkleben der Masse 15 auf dem Gurt 6 unterbunden wird.

In weiterer Folge wird die von der Auftragseinheit 5b auf die Trennschicht 14 aufgebrachte Masse 15 vom Gurt 6 zur ersten Formeinheit befördert. Diese ist als Nivellierwalze 8 ausgebildet und dient zum Ebnen und Verteilen der Masse 15, wobei die Oberfläche der Masse 15 geglättet wird. Zudem ist die Nivellierwalze 8 derart ausgebildet, dass ein Anhaften der Masse 15 weitestgehend vermieden wird. Um ein Anhaften der Masse 15 vollständig zu unterbinden, sind zudem zwei gegenüberliegende, an der Oberfläche der Walze anliegende und sich entlang der Drehachse erstreckende Abstreifer 9a, 9b vorgesehen. Dabei ist der Abstreifer 9a in Prozessrichtung R vor der Nivellierwalze 8 angeordnet, sodass etwaige an der Nivellierwalze 8 anhaftende Masse 15 entsprechend zurückgehalten wird und nicht erneut mit Masse 15 in Kontakt kommt. Um jedoch zu verhindern, dass überhaupt Masse 15 an der Nivellierwalze 8 anhaftet ist der Abstreifer 9b keilförmig ausgebildet und in Prozessrichtung R nach der Nivellierwalze 8 nahe einer Auflagefläche der Nivellierwalze 8 auf der Masse 15 angeordnet.

Darüber hinaus ist eine weitere Formeinheit vorgesehen, welche im Wesentlichen als Schneidwalze 10 ausgebildet ist und die Masse 15 in eine Längsrichtung des Gurtes 6 und damit in Prozessrichtung R teilt. Hierbei kann die Breite der erhaltenen Bahnen mit dem Abstand der Schneidelemente der Schneidwalze 10 gewählt werden, um wahlweise größer oder kleiner dimensionierte Pellets 13 herzustellen.

Darauffolgend wird die geglättete und in Prozessrichtung R geteilte Masse 15 von einer Heizeinrichtung 11 auf eine Temperatur unterhalb der Glasübergangstemperatur, insbesondere auf Temperaturen zwischen 100 °C und 500 °C, erhitzt. Hierzu kommen auf Infrarottechnologie basierende Heizelemente zum Einsatz, welche ober- und unterhalb des Gurtes 6 angeordnet sind. Dabei ist die Heizeinrichtung 11 so ausgebildet, dass diese aus Sicherheitsgründen und/oder zur Wartung schwenkbar gelagert und dadurch aus einer Arbeitsposition wegklappbar ist. Hierbei wird das in der Masse 15 enthaltene Wasser abgedampft, wodurch das flüssige Wasserglas anfänglich geliert und letzten Endes aushärtet. Dadurch entsteht eine gehärtete Masse 15, in welcher das enthaltene Glaspulver vom getrockneten Wasserglas zusammengehalten wird.

Im Anschluss wird die gehärtete Masse 15 von einer im Wesentlichen als Kante 12 ausgebildeten Formeinheit in einer Querrichtung gebrochen, wodurch sich eine endgültige Form der hergestellten Pellets 13 ergibt. Entsprechend der Auftragungsbreite der Masse 15 können die Pellets 13 mit einer Länge zwischen 10 cm und 50 cm, einer Breite zwischen 5 cm und 25 cm sowie einer Höhe zwischen 1 cm und 15 cm hergestellt werden. Alternativ kann die Herstellung der Stückware auch ohne das Teilen in Längsrichtung erfolgen, wobei die vollständige Auftragungsbreite der Masse 15 beibehalten wird, sodass Pellets 13 mit einer Länge zwischen 10 cm und 250 cm, einer Breite zwischen 5 cm und 25 cm und einer Höhe zwischen 1 cm und 15 cm erhalten wird. Zudem kann in einer alternativen Ausführung zum Brechen der gehärteten Masse 15 auch ein in Querrichtung angeordneter Stempel vorgesehen sein.

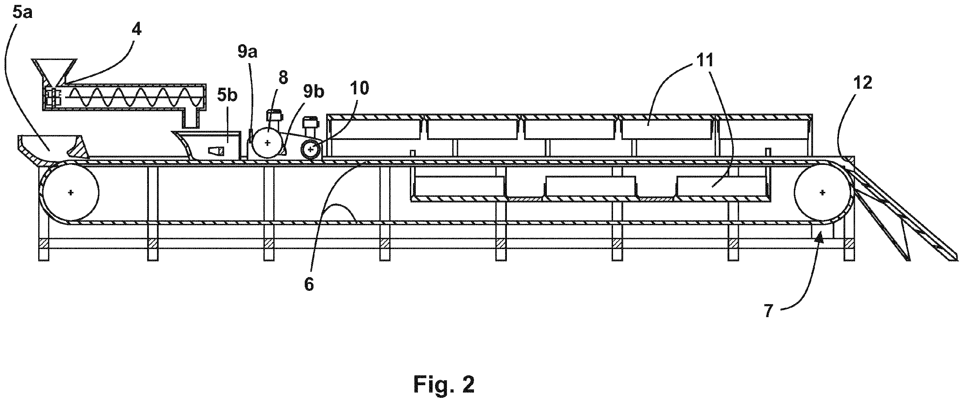

Fig. 2 zeigt eine Schnittansicht der Vorrichtung 1 aus Fig. 1. Hierbei ist der innere Aufbau einer Mischeinheit 4 ersichtlich, wobei diese einen Rotor-Stator-Mischer, eine Förderschnecke, einen trichterförmigen Einlass sowie einen vertikal orientierten Auslass umfasst. Letzterer befördert die homogen vermischte Masse 15 aus Wasserglas und Glaspulver in die Auftragseinheit 5b. Zudem kann die weitere Auftragseinheit 5a am Ende des Bandförderers 7 samt Gurt 6, welcher die Arbeitsfläche bildet, erkannt werden, wobei diese zur Auftragung von Glaspulver ausgebildet ist, welches als Trennschicht 14 zwischen dem Gurt 6 und der Masse 15 wirkt. Im Weiteren sind auch Anordnung und Form der Abstreifer 9a, 9b, welche an der als Nivellierwalze 8 ausgebildeten Formeinheit angeordnet sind, erkennbar. Die dargestellte Form und Anordnung der Abstreifer 9a, 9b hat sich zwar als zweckmäßig herausgestellt, jedoch könnten die Abstreifer 9a, 9b in einer alternativen Ausbildung näher am Auflagepunkt der Nivellierwalze 8, jener Punkt an dem die Nivellierwalze 8 die Oberfläche der Masse 15 berührt, angeordnet sein. Zudem könnten diese keilförmig ausgebildet sein, wobei die Spitzen der Keile Abstreiflippen bilden, welche die Oberfläche der Nivellierwalze 8 berühren. Darüber hinaus ist die klappbare Anordnung der Heizeinrichtung 11 ober- und unterhalb des Gurtes 6 eindeutig erkennbar. Außerdem ist die nach der Heizeinrichtung 11 angeordnete Formeinheit dargestellt, welche in dieser Variante als abgeschrägte Kante 12 ausgebildet ist. An der Kante 12 auftreffende gehärtete Masse 15 wird in einer Querrichtung zur Prozessrichtung R derart gebrochen, dass daraus Pellets 13 entstehen.

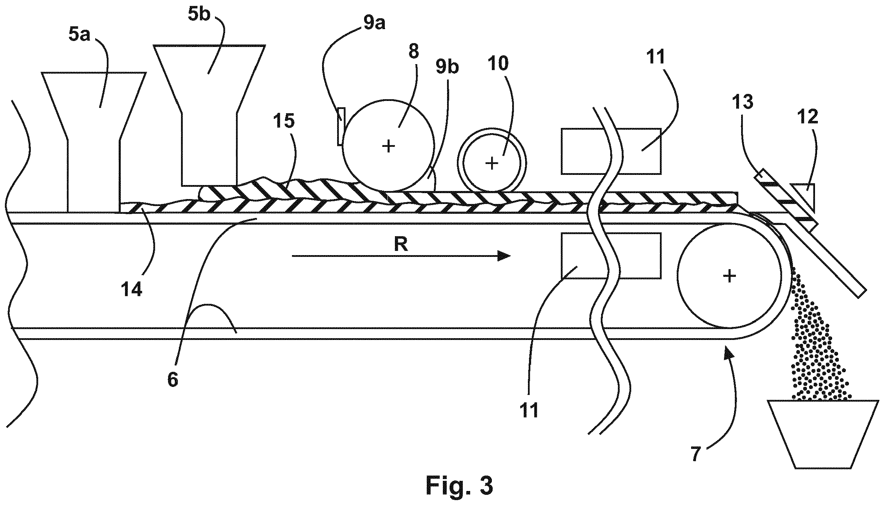

Fig. 3 zeigt eine schematische Darstellung eines erfindungsgemäßen Verfahrens. Dabei wird durch die Auftragseinheit 5a eine Trennschicht 14, die hier durch Glaspulver gebildet wird, auf den Gurt 6 des Bandförderers 7 aufgebracht, sodass ein Festkleben der Masse 15 auf dem Gurt 6 verhindert wird. Die Auftragseinheit 5b trägt in weiterer Folge die Masse 15 auf die Trennschicht 14 auf, wobei sich allerdings Unregelmäßigkeiten an deren Oberfläche und damit eine variierende Schichtdicke der Masse 15 ergeben können.

Folglich wird die Nivellierwalze 8 eingesetzt, um die Oberfläche der Masse 15 zu glätten und eine gleichmäßige Schichtdicke sicherzustellen. Um ein Anhaften der Masse 15 auf der Nivellierwalze 8 zu verhindern, wird der Abstreifer 9b in Prozessrichtung R nach der Nivellierwalze 8 angeordnet. Sollte aber dennoch Masse 15 an der Nivellierwalze 8 anhaften, ist der Abstreifer 9a vorgesehen, um etwaige anhaftende Masse 15 von der Nivellierwalze 8 zu entfernen, damit diese nicht erneut mit Masse 15 in Kontakt gebracht und folglich eine gleichmäßige Schichtdicke durch den Nivellierprozess erzielt wird.

In Prozessrichtung R folgt dem Nivellierprozess ein weiterer formgebender Schritt, in welchem die Masse 15 von der Schneidwalze 10 in Prozessrichtung R und somit entlang der Längsrichtung der Masse 15 geteilt wird, sodass die Masse 15 nunmehr als eine Vielzahl von Streifen weiterverarbeitet wird. Hierbei können ein oder mehrere Schneidelemente an der Schneidwalze 10 angeordnet sein, sodass die Breite der Streifen abhängig von der Gesamtbreite des Gurtes 6 zwischen 10 cm und 250 cm variiert werden kann.

Die in Streifenform vorliegende Masse 15 wird in weiterer Folge von zumindest einer Temperatureinheit 11 auf eine Temperatur unterhalb der Glasübergangstemperatur, insbesondere auf Temperaturen zwischen 100 °C und 500 °C, erhitzt, sodass in der Masse 15 befindliches Wasser abgedampft und die Masse 15 dadurch gehärtet wird. Dementsprechend härtet das in der Masse 15 enthaltene Wasserglas aus und verbindet die in der Masse 15 enthaltenen Glaspulverpartikel derart miteinander, dass eine feste Struktur entsteht, die in weiterer Folge von der Kante 12 abgebrochen wird.

Schließlich entstehen aus den gehärteten Masse 15 streifen Pellets 13, die in Länge und Höhe ident zu Breite und Schichtdicke der vorangegangenen Streifen und in der Breite Abmessungen zwischen 5 cm und 25 cm aufweisen.

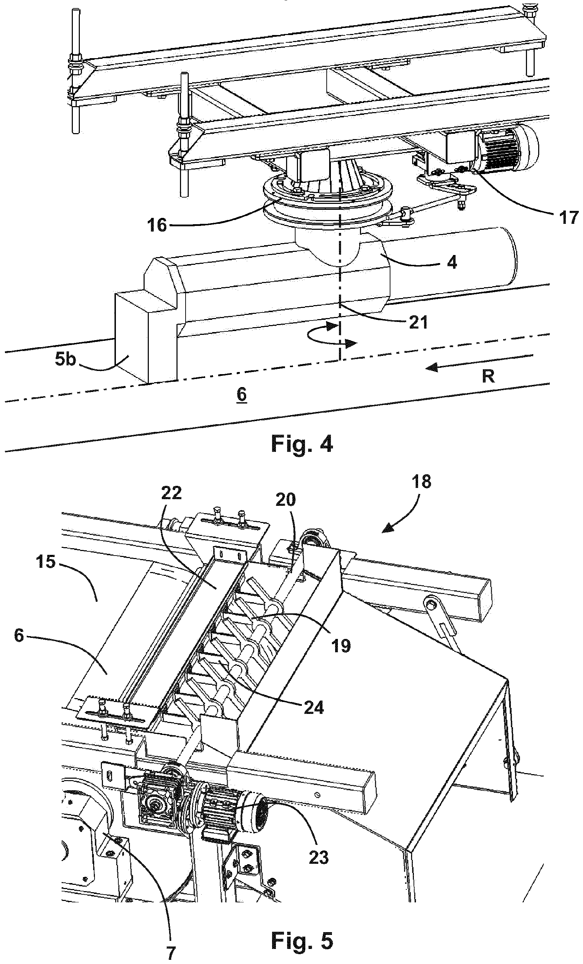

In Fig. 4 wird eine perspektivische Darstellung einer schwenkbaren Auftragseinheit 5b gezeigt, welche mit der Mischeinheit 4 zu einer kombinierten Einheit zusammengefügt und über eine Aufhängung 16 schwenkbar an einer Trägerkonstruktion befestigt ist. Dabei ist die Auftragseinheit 5b über die Aufhängung 16 schwenkbar an der Trägerkonstruktion befestigt, wobei die Aufhängung 16 aber auch die Möglichkeit bieten kann, den Einlass zum Überleiten der Komponenten von der Wiegeeinheit 3 in die Mischeinheit 4 zu nutzen. Zudem ist ein motorgesteuerter Antrieb, welcher hier als Servoantrieb 17 ausgebildet ist, vorgesehen, über welchen eine Schwenkbewegung der Auftragseinheit 5b gesteuert werden kann.

Der innere Aufbau der Mischeinheit 4 kann der Fig. 2 entnommen werden. Hier ist eine Auftragseinheit 5b unmittelbar an die Mischeinheit 4 angrenzend angeordnet, um die homogen vermischte Masse 15 direkt auf den Gurt 6 aufbringen zu können.

Zudem erfolgt die Auftragung der Masse 15 auf den Gurt 6 während der durch den Servoantrieb 17 erzeugten Schwenkbewegung, wobei die Auftragseinheit 5b um eine senkrecht auf die Längsachse des Gurtes 6 bzw. die Prozessrichtung R stehende Schwenkachse 21 geschwenkt und in eine oszillierende Bewegung versetzt wird. Um Abweichungen einer Schichtdicke der Masse 15 an den Umkehrpunkten der Schwenkbewegung zu verhindern, kann ein Servoantrieb 17 die Schwenkbewegung nahe der Umkehrpunkte beschleunigen und eine etwaige Haltezeit verhindern. Dadurch kann eine besonders gleichmäßige Auftragung der Masse 15 direkt auf den Gurt 6 erfolgen, weshalb auf eine weitere Auftragseinheit 5a zum Aufbringen einer Trennschicht 14 verzichtet werden kann.

Fig. 5 wird eine perspektivische Darstellung einer Brechvorrichtung 18 gezeigt, welche am Ende eines Bandförderers 7 angeordnet ist, also der Heizeinrichtung 11 in Prozessrichtung R nachgelagert. Dabei ersetzt die Brechvorrichtung 18 die Kante 12 zum Brechen der gehärteten Masse 15 und legt eine Dimensionierung der Pellets 13 fest. Hierzu weist die dargestellte Brechvorrichtung 18 ein oder mehrere Brechelemente 19 zum Brechen bzw. Abschlagen der Masse 15 auf. Zudem sind die Brechelemente 19 über eine Welle 20 miteinander verbunden und können durch eine Rotation der Welle 20, welche hier parallel zur Querrichtung ist, in Bewegung versetzt werden. Um die Rotation der Welle 20 konstant halten zu können, ist ein motorgesteuerter Antrieb 23 vorgesehen.

Um sicherzustellen, dass die Masse 15 bei einem Brechvorgang von jedem Brechelement 19 gleichmäßig erfasst und gebrochen wird, ist eine kammartige Gegenplatte 22 an der Brecheinrichtung 18 angeordnet. Dabei nimmt die Gegenplatte 22 die auf dem Gurt 6 befindliche Masse 15 auf und leitet diese direkt zu den Brechelementen 19 weiter. In weiterer Folge wird die Masse 15 von den Brechelementen 19 über kammartig angeordnete Zinken 24 der Gegenplatte 22 in Längssowie Querrichtung gebrochen und verlässt die Vorrichtung 1 in Form von Pellets 13. Um die Masse 15 in gleichgroße Pellets 13 zu brechen, sind die Brechelemente 19 auf der Welle 20 und die Zinken 24 an der Gegenplatte 22 in gleichmäßigen Abständen angeordnet. Im dargestellten Ausführungsbeispiel kommen sieben Brechelemente 19 zum Einsatz. Von der Brecheinrichtung fallen die fertigen Pellets 13 nach unten und können dort einfach für eine weitere Verwendung, beispielsweise zur Beimengung einer Glasschmelze, gesammelt werden.

Mit einem erfindungsgemäßen Verfahren und einer entsprechenden Vorrichtung ist es auch einfache Weise möglich, Glaspulver zu Stückware bzw. Pellets 13 zu verarbeiten, welche anschließend einer Glasschmelze beigemengt werden können, sodass auch bislang nicht weiter verarbeitbares Glaspulver recycelt werden kann.

## Patentansprüche

1. Verfahren zur Herstellung von Stückware, **dadurch gekennzeichnet, dass** flüssiges Wasserglas mit zumindest einer festen Komponente auf Silicatbasis, insbesondere Glaspulver, zu einer Masse (15) vermischt und flächig auf eine Arbeitsfläche aufgebracht wird, wobei die Arbeitsfläche durch einen Gurt (6) eines Bandförderers (7) gebildet wird, wonach die Masse (15) geteilt und auf eine Temperatur unterhalb einer Glasübergangstemperatur erhitzt wird, sodass Stückware erhalten wird, insbesondere ein oder mehrere formstabile Pellets (13).

2. Verfahren nach Anspruch 1, **dadurch gekennzeichnet, dass** auf die Arbeitsfläche eine pulverförmige Komponente auf Silicatbasis, insbesondere Glaspulver, aufgebracht wird, bevor die Masse (15) auf die Arbeitsfläche aufgebracht wird, sodass die pulverförmige Komponente eine Trennschicht (14) zwischen Masse (15) und Arbeitsfläche bildet.

3. Verfahren nach Anspruch 1 oder 2, **dadurch gekennzeichnet, dass** zur Bildung der Masse (15) flüssiges Wasserglas mit Wasser und der festen Komponente vermischt wird, wobei bevorzugt zunächst das flüssige Wasserglas mit Wasser verdünnt und anschließend die feste Komponente beigemengt wird.

4. Verfahren nach einem der Ansprüche 1 bis 3, **dadurch gekennzeichnet, dass** die Masse (15) mit einer Schichtdicke zwischen 1 cm bis 15 cm, bevorzugt zwischen 1 cm und 5 cm, und einer Breite zwischen 50 cm und 250 cm, bevorzugt zwischen 70 cm und120 cm, auf die Arbeitsfläche aufgebracht wird.

5. Verfahren nach einem der Ansprüche 1 bis 4, **dadurch gekennzeichnet, dass** die Masse (15) entlang einer Längsrichtung und/oder Querrichtung geteilt wird.

6. Verfahren nach einem der Ansprüche 1 bis 5, **dadurch gekennzeichnet, dass** die Masse (15) auf eine Temperatur zwischen 100°C und 500°C, bevorzugt 200°C bis 400°C, erhitzt und dabei gehärtet wird.

7. Verfahren nach einem der Ansprüche 1 bis 6, **dadurch gekennzeichnet, dass** die Stückware mit einer Länge zwischen 10 cm und 250 cm, einer Breite zwischen 5 cm und 25 cm und einer Höhe zwischen 1 cm und 15 cm hergestellt wird.

8. Verfahren zur Herstellung von Glas, wobei einer Glasschmelze, Glaspulver beigemengt wird, **dadurch gekennzeichnet, dass** das Glaspulver zunächst in einem Verfahren nach einem der Ansprüche 1 bis 7 zu Stückware verarbeitet wird, wonach die Stückware der Glasschmelze beigemengt wird.

9. Vorrichtung (1) zur Herstellung einer Stückware, insbesondere zur Durchführung eines Verfahrens nach einem der Ansprüche 1 bis 8, **dadurch gekennzeichnet, dass** zumindest eine Bereitstellungseinheit vorgesehen ist, mit welcher flüssiges Wasserglas und zumindest eine feste Komponente auf Silicatbasis in eine Mischeinheit (4) einbringbar sind, wobei die Mischeinheit (4) zum Vermischen des flüssigen Wasserglases und der festen Komponente auf Silicatbasis zu einer Masse (15) ausgebildet ist und zumindest eine Auftragseinheit (5a, 5b) zum Auftragen der Masse (15) auf eine Arbeitsfläche vorgesehen ist, welche Arbeitsfläche als Gurt (6) eines Bandförderers (7) ausgebildet ist, wobei entlang der Arbeitsfläche zumindest eine Formeinheit zum Teilen der Masse (15) sowie zumindest eine Heizeinrichtung (11) zum Erhitzen der Masse (15) angeordnet sind.

10. Vorrichtung (1) nach Anspruch 9, **dadurch gekennzeichnet, dass** die Arbeitsfläche relativ zur Auftragseinheit (5a, 5b) bewegbar ist.

11. Vorrichtung (1) nach Anspruch 9 oder 10, **dadurch gekennzeichnet, dass** der Gurt (6) als Maschendraht-Gurt ausgebildet ist.

12. Vorrichtung (1) nach einem der Ansprüche 9 bis 11, **dadurch gekennzeichnet, dass** entlang einer Längsrichtung der Arbeitsfläche zwei Auftragseinheiten (5a, 5b) vorgesehen sind, wobei mit einer ersten Auftragseinheit (5a) eine pulverförmige Komponente und mit einer der ersten Auftragseinheit (5a) in Längsrichtung nachgelagerten zweiten Auftragseinheit (5b) die Masse (15) auf die Arbeitsfläche aufbringbar ist.

13. Vorrichtung (1) nach einem der Ansprüche 9 bis 12, **dadurch gekennzeichnet, dass** mehrere Formeinheiten zum Nivellieren, Teilen und Abtrennen der Masse (15) entlang der Arbeitsfläche angeordnet sind.

14. Vorrichtung (1) nach einem der Ansprüche 9 bis 13, **dadurch gekennzeichnet, dass** zumindest eine Heizeinrichtung (11) ober- und/oder unterhalb der Arbeitsfläche angeordnet ist.

15. Vorrichtung (1) nach einem der Ansprüche 9 bis 14, **dadurch gekennzeichnet, dass** die Heizeinrichtung (11) als Infrarot-, Mikrowellen-, Gas- und/oder Elektroheizstrahler ausgebildet ist.

## Claims

1. Method for producing piece goods, **characterized in that** liquid water glass is mixed with at least one silicate-based solid component, in particular glass powder, to form a mass (15) and is applied flat over a work surface, wherein the work surface is formed by a belt (6) of a belt conveyor (7), after which the mass (15) is divided and heated to a temperature below a glass transition temperature, so that piece goods are obtained, in particular one or more dimensionally stable pellets (13).

2. Method according to Claim 1, **characterized in that** a powdered silicate-based component, in particular powdered glass, is applied to the work surface before the mass (15) is applied to the work surface, so that the powdered component forms a separating layer (14) between the mass (15) and the work surface.

3. Method according to Claim 1 or 2, **characterized in that** liquid water glass is mixed with water and the solid component to form the mass (15), wherein the liquid water glass is preferably first diluted with water and then the solid component is added.

4. Method according to any one of Claims 1 to 3, **characterized in that** the mass (15) is applied to the work surface with a layer thickness between 1 cm and 15 cm, preferably between 1 cm and 5 cm, and a width between 50 cm and 250 cm, preferably between 70 cm and 120 cm.

5. Method according to any one of Claims 1 to 4, **characterized in that** the mass (15) is divided along a longitudinal and/or transverse direction.

6. Method according to any one of Claims 1 to 5, **characterized in that** the mass (15) is heated to a temperature between 100 °C and 500 °C, preferably 200 °C to 400 °C, and is hardened in the process.

7. Method according to any one of Claims 1 to 6, **characterized in that** the piece goods are produced with a length of between 10 cm and 250 cm, a width of between 5 cm and 25 cm, and a height of between 1 cm and 15 cm.

8. Method for producing glass, in which glass powder is added to a glass melt, **characterized in that** the glass powder is first processed to obtain piece goods in a method according to any one of Claims 1 to 7, after which the piece goods are added to the glass melt.

9. Apparatus (1) for producing piece goods, in particular for carrying out a method according to any one of Claims 1 to 8, **characterized in that** at least one supply unit is provided, with which liquid water glass and at least one solid silicate-based component can be introduced into a mixing unit (4), wherein the mixing unit (4) is designed to mix the liquid water glass and the solid silicate-based component to form a mass (15), and at least one application unit (5a, 5b) is provided for applying the mass (15) to a work surface, which work surface is embodied as a belt (6) of a belt conveyor (7), wherein at least one shaping unit for dividing the mass (15) and at least one heating device (11) for heating the mass (15) are arranged along the work surface.

10. Apparatus (1) according to Claim 9, **characterized in that** the work surface is movable relative to the application unit (5a, 5b).

11. Apparatus (1) according to Claim 9 or 10, **characterized in that** the belt (6) is designed as a wire mesh belt.

12. Apparatus (1) according to any one of Claims 9 to 11, **characterized in that** two application units (5a, 5b) are provided along a longitudinal direction of the work surface, wherein a powdery component can be applied to the work surface with a first application unit (5a), and the mass (15) can be applied to the work surface with a second application unit (5b) arranged downstream of the first application unit (5a) in the longitudinal direction.

13. Apparatus (1) according to any one of Claims 9 to 12, **characterized in that** several shaping units for levelling, dividing and separating the mass (15) are arranged along the work surface.

14. Apparatus (1) according to any one of Claims 9 to 13, **characterized in that** at least one heating device (11) is arranged above and/or below the work surface.

15. Apparatus (1) according to any one of Claims 9 to 14, **characterized in that** the heating device (11) is designed as an infrared, microwave, gas and/or electric radiant heater.

## Revendications

1. Procédé de fabrication de produits en vrac, **caractérisé en ce que** l'on mélange du verre soluble liquide avec au moins un constituant solide à base de silicate, s'agissant notamment d'une poudre de verre, pour ainsi obtenir une masse (15) et l'étaler sur une surface de travail, ladite surface de travail étant formée par un tapis (6) d'une bande transporteuse (7), ladite masse (15) subissant ensuite une division et étant chauffée à une température en-dessous de la température de transition vitreuse, pour ainsi obtenir des produits en vrac, s'agissant notamment d'une ou de plusieurs boulettes (13) de forme stable.

2. Procédé selon la revendication 1, **caractérisé en ce qu'**un constituant pulvérulent à base de silicate, s'agissant notamment d'une poudre de verre, est appliqué sur ladite surface de travail, avant d'appliquer la masse (15) sur la surface de travail, faisant en sorte que ledit constituant pulvérulent forme une couche de séparation (14) entre la masse (15) et la surface de travail.

3. Procédé selon les revendications 1 ou 2, **caractérisé en ce que** l'on mélange du verre soluble liquide avec de l'eau et avec ledit constituant solide afin de former la masse (15), le verre soluble liquide étant préférentiellement d'abord dilué avec le l'eau pour suite y incorporer ledit constituant solide.

4. Procédé selon l'une des revendications 1 à 3, **caractérisé en ce que** la masse (15) est appliquée sur ladite surface de travail de manière à obtenir une épaisseur de couche comprise entre 1 cm et 15 cm, de préférence comprise entre 1 cm et 5 cm, et à obtenir une largeur comprise entre 50 cm et 250 cm, de préférence entre 70 cm et 120 cm.

5. Procédé selon l'une des revendications 1 à 4, **caractérisé en ce que** la masse (15) subit une division selon une Direction Longitudinale et/ou une direction transversale.

6. Procédé selon l'une des revendications 1 à 5, **caractérisé en ce que** la masse (15) est chauffée à une température comprise entre 100 °C et 500 °C, de préférence entre 200 °C et 400 °C, tout en subissant en durcissement.

7. Procédé selon l'une des revendications 1 à 6, **caractérisé en ce que** lesdits produits en vrac sont fabriqués de manière à ce que leur longueur soit comprise entre 10 cm et 250 cm, leur largeur soit comprise entre 5 cm et 25 cm et leur hauteur soit comprise entre 1 cm et 15 cm.

8. Procédé de fabrication de verre, consistant à incorporer de la poudre de verre à un à verre en fusion, **caractérisé en ce que** ladite poudre de verre est d'abord transformée en produits en vrac dans un procédé selon l'une des revendications 1 à 7, pour ensuite incorporer les produits en vrac audit verre en fusion.

9. Dispositif (1) destiné à fabriquer des produits en vrac, plus particulièrement à mettre en œuvre un procédé selon l'une des revendications 1 à 8, **caractérisé en ce qu'**il comporte au moins une unité de mise à disposition permettant d'introduire du verre soluble liquide et au moins un constituant solide à base de silicate dans une unité de mélange (4), l'unité de mélange (4) étant réalisée de manière à pouvoir mélanger le verre soluble liquide et le constituant solide à base de silicate pour ainsi obtenir une masse (15) et étant dotée d'au moins une unité d'application (5a, 5b) destinée à appliquer la masse (15) sur une surface de travail, ladite surface de travail correspondant à un tapis (6) d'une bande transporteuse (7), au moins une unité de mise en forme qui permet de diviser la masse (15) et au moins un organe de chauffage (11) qui permet de chauffer la masse (15) étant disposées le long de ladite surface de travail.

10. Dispositif (1) selon la revendication 9, **caractérisé en ce que** ladite surface de travail peut être déplacée par rapport à l'unité d'application (5a, 5b).

11. Dispositif (1) selon les revendications 9 ou 10, **caractérisé en ce que** le tapis (6) est réalisé sous forme d'un tapis formé par un grillage de fils métalliques.

12. Dispositif (1) selon l'une des revendications 9 à 11, **caractérisé en ce que** deux unités d'application (5a, 5b) sont prévues le long d'une direction longitudinale de ladite surface de travail, une première unité d'application (5a) permettant d'appliquer un constituant pulvérulent et une deuxième unité d'application (5b), située en aval de la première unité d'application (5a) selon la direction longitudinale, permettant d'appliquer la masse (15) sur la surface de travail.

13. Dispositif (1) selon l'une des revendications 9 à 12, **caractérisé en ce que** plusieurs unités de mise en forme sont disposées le long de ladite surface de travail pour niveler, diviser et séparer la masse (15).

14. Dispositif (1) selon l'une des revendications 9 à 13, **caractérisé en ce qu'**au moins un organe de chauffage (11) est disposé en-dessus et/ou en-dessous de ladite surface de travail.

15. Dispositif (1) selon l'une des revendications 9 à 14, **caractérisé en ce que** l'organe de chauffage (11) est réalisé sous forme d'un radiateur fonctionnant au rayonnement infrarouge, aux micro-ondes, au gaz et/ou à l'électricité.
